(19) Europäisches Patentamt
European Patent Office
Office européen des brevets

(11) EP 2 867 263 B1

# (12) FASCICULE DE BREVET EUROPEEN

(45) Date de publication et mention de la délivrance du brevet:
**27.11.2019 Bulletin 2019/48**

(21) Numéro de dépôt: **13732569.2**

(22) Date de dépôt: **01.07.2013**

(51) Int Cl.:
***C08F 36/04*** (2006.01) ***C08F 2/02*** (2006.01)
***C08F 36/08*** (2006.01) ***B29B 9/02*** (2006.01)

(86) Numéro de dépôt international:
**PCT/EP2013/063864**

(87) Numéro de publication internationale:
**WO 2014/006007 (09.01.2014 Gazette 2014/02)**

## (54) PROCEDE DE SYNTHESE EN CONTINU D'UN ELASTOMERE DIENIQUE

VERFAHREN ZUR KONTINUIERLICHEN SYNTHESE EINES DIENELASTOMERS

PROCESS FOR CONTINUOUS SYNTHESIS OF A DIENE ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2012 FR 1256328**

(43) Date de publication de la demande:
**06.05.2015 Bulletin 2015/19**

(73) Titulaire: **Compagnie Générale des Etablissements Michelin**
**63000 Clermont-Ferrand (FR)**

(72) Inventeurs:
- **DUSSILLOLS, Jérôme**
  **F-63040 Clermont-Ferrand Cedex 9 (FR)**
- **KIENER, Pierre**
  **F-63040 Clermont-Ferrand Cedex 9 (FR)**
- **PAROLA, Hélène**
  **F-63040 Clermont-Ferrand Cedex 9 (FR)**

(74) Mandataire: **Le Cam, Véronique Marie Christine et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2006/034875**
**GB-A- 1 347 088**
**US-A- 3 389 130**
**US-A- 3 458 490**
**US-A- 3 770 710**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 867 263 B1

## Description

La présente invention concerne un procédé de synthèse en masse ou en milieu concentré dit semi-masse d'élastomères diéniques avec un taux de conversion élevé. L'invention s'applique notamment à l'obtention en continu d'élastomères diéniques.

Lors d'une polymérisation en masse, le milieu réactionnel est dépourvu de solvant ou de diluant. Les monomères sont alors polymérisés en l'absence de tout solvant. Les composants du milieu réactionnel en présence sont les monomères, le polymère et les constituants du système catalytique permettant la polymérisation. La polymérisation en milieu concentré dit semi-masse met quant à elle en œuvre qu'une quantité réduite de solvant par rapport à la polymérisation en solution. C'est une polymérisation qui se déroule dans une solution très concentrée en polymère et faiblement concentrée en solvant.

L'absence de solvant ou de diluant, ou encore la présence d'une quantité réduite de solvant ou de diluant dans le milieu réactionnel présente des avantages économiques et environnementaux non négligeables. L'utilisation de solvant ou de diluant en polymérisation implique que ce dernier soit séparé du polymère préparé à l'issue de l'étape de polymérisation. Le solvant ou diluant extrait est généralement recyclé pour être réutilisé. Le coût de l'extraction et du recyclage du solvant ou diluant augmente de manière significative le coût de synthèse du polymère.

Ainsi, polymériser en masse ou en semi-masse présente de nombreux avantages. Ce type de polymérisation présente notamment un intérêt d'ordre économique, surtout en ce qui concerne les coûts d'investissement. En effet, la taille des équipements, en particulier ceux en dehors de la partie réactionnelle, est réduite du fait de la faible quantité de solvant utilisé.

Cette diminution de la quantité de solvant ou de diluant donne aussi accès à une productivité plus élevée des réacteurs. En outre, cette réduction ou suppression du solvant ou du diluant entraîne de fait une diminution de la quantité d'énergie (sous forme de vapeur pour une élimination du solvant par stripping à la vapeur d'eau) pour séparer l'élastomère du solvant, ainsi qu'une diminution du flux de solvant à traiter. Toutes ces caractéristiques conduisent à une diminution des coûts énergétiques du procédé de polymérisation.

Par ailleurs, la quantité de catalyseur est en général diminuée, ce qui baisse le coût des matières premières. Outre ces aspects économiques, la diminution du flux de solvant a un impact environnemental puisqu'elle entraîne une réduction des pertes émissives et une diminution de la consommation énergétique.

Par le passé plusieurs procédés de polymérisation en masse ou semi-masse de diènes conjugués ont été proposés. On peut par exemple citer le brevet EP 0 127 236 B1 qui décrit la polymérisation en masse du butadiène. Il s'agit d'une polymérisation catalytique en continu du butadiène, conduite sans ou avec une faible proportion de solvant, allant jusqu'à 2% en masse par rapport à la masse du monomère. Un système catalytique à base de néodyme et le butadiène alimentent un réacteur/extrudeur de polymérisation. La polymérisation s'effectue avec une teneur en monomère en entrée du réacteur/extrudeur comprise entre 66% et 96% de la masse totale solvant + monomère. Dans ce type de réacteur, les variations de temps de séjour sont limitées. Cet inconvénient majeur ne permet pas d'accéder à des réactions nécessitant des temps de séjour importants. Il ne permet pas non plus d'avoir de la flexibilité dans la conduite de la réaction. En outre, avec ce type de réacteur/extrudeur, il est difficile d'avoir une température de polymérisation constante, ce qui peut, selon le système catalytique utilisé, impacter les propriétés des polymères synthétisés, notamment leur microstructure ou leur macrostructure.

Un autre document, la demande WO 2005/087824, décrit un procédé de polymérisation de diènes conjugués qui peut être mis en œuvre en continu ou en discontinu avec moins de 50% en masse de solvant. Il met en œuvre un système catalytique à base de lanthanide ou de cobalt. La polymérisation est conduite dans un premier réacteur jusqu'à un taux de conversion d'au plus 20%. Le polymère est déchargé et transféré dans un deuxième réacteur dans lequel une dévolatilisation peut être réalisée.

La limitation à un taux de conversion faible de 20% conduit à une faible productivité de ce procédé. En outre, le monomère non converti doit être extrait et traité pour être réintroduit dans le premier réacteur. Ce traitement se fait sur des volumes importants de monomère non converti. Cet aspect du procédé le rend peu attractif du fait de son impact énergétique et économique sur le coût du procédé.

La limitation à un taux de conversion faible de la polymérisation en masse ou semi-masse est également dictée par l'apparition d'un phénomène physique qui pourrait dégrader la nature du polymère obtenu et engendrer des situations non contrôlables dans une production industrielle. En effet, la vaporisation d'une partie du monomère liquide, sous l'effet de l'énergie de la réaction de polymérisation, conduit, à partir d'une certaine concentration de polymère dans le milieu réactionnel, à une expansion excessive du milieu réactionnel. Dans de telles conditions opératoires, il n'est plus possible de contrôler la thermique de la réaction et le polymère peut s'en trouver dénaturé.

Des solutions ont déjà été apportées par le passé pour remédier à ce problème d'expansion du milieu de polymérisation, notamment celle de réduire le taux de conversion et de le maintenir en-dessous de la limite au-dessus de laquelle le phénomène est observé à une température donnée.

Ainsi, US 3,770,710 qui vise directement à remédier au phénomène d'expansion, propose un procédé de polymérisation en continu de diènes conjugués en deux étapes. La première étape consiste en une polymérisation d'un butadiène liquide à basse température, en dessous de 50°C, jusqu'à atteindre un taux de conversion compris entre 20% et 40%. La température est maintenue par une évaporation contrôlée de la phase liquide. La deuxième étape consiste en la poursuite de la polymérisation et le séchage du polymère obtenu dans une zone distincte de la première, notamment une extrudeuse, à une température plus élevée variant de 50°C à 150°C.
Si le phénomène d'expansion est évité, le procédé décrit dans ce document présente des inconvénients proches de ceux d'autres procédés existants, notamment une faible productivité du procédé du fait d'un taux de conversion inférieur à 40%, ainsi qu'une faible attractivité du fait des volumes importants de monomère non converti à manipuler qui conduit à un impact énergétique et économique important.
Au vu des procédés de polymérisation en masse de l'art antérieur, le problème technique qui se pose est notamment de pouvoir disposer d'un procédé de synthèse, en milieu très concentré et en continu, de polymères diéniques présentant en outre une productivité accrue en évitant le phénomène d'expansion du milieu réactionnel et permettant une flexibilité dans la conduite du procédé notamment dans une large gamme de températures tout en maintenant la température de la réaction constante.
Ainsi, la présente invention apporte une solution à ce problème. Elle a notamment pour but d'améliorer les conditions de polymérisation de diènes conjugués en milieu très concentré afin de pouvoir atteindre des taux de conversion élevés, sans apparition de phénomène d'expansion du milieu réactionnel..

L'invention a également pour but de procurer les avantages énergétiques et environnementaux liés à la polymérisation en masse ou semi-masse et à la possibilité de mettre en œuvre le procédé dans un large domaine de températures de réaction.
L'invention a encore pour but un procédé de polymérisation applicable à la polymérisation en masse ou semi-masse qui soit adaptable à une production industrielle économiquement intéressante avec une productivité satisfaisante.
Ces buts sont atteints en ce que les Inventeurs ont mis au point un procédé de polymérisation de diènes conjugués dans des milieux très concentrés qui met en œuvre des réacteurs spécifiques et permet d'atteindre un taux élevé de conversion pouvant atteindre 100% avec des teneurs massiques dans le flux d'alimentation en monomère allant de 30 à 100 % du milieu réactionnel.
Dans la mesure où le procédé selon l'invention se déroule en continu, il faut comprendre que ces étapes se déroulent simultanément une fois le réacteur alimenté.
Ainsi un premier objet de l'invention est un procédé de synthèse en continu d'un élastomère diénique comprenant simultanément :

- l'introduction en continu dans un réacteur spécifique doté d'une phase gaz et équipé d'au moins un mobile d'agitation et d'un dispositif de décharge, d'au moins
  - un ou plusieurs monomère(s) à polymériser dont au moins un monomère diène conjugué, et,
  - le cas échéant, un solvant organique
- la polymérisation du ou des monomère(s) en élastomère diénique dans un milieu de polymérisation agité,
- la décharge en continu de la pâte d'élastomère issue de la polymérisation,
- la coupe de la pâte d'élastomère déchargée en particules, et
- l'élimination du solvant des particules obtenus à l'étape précédente et
- la récupération de l'élastomère diénique des particules ainsi obtenues à l'étape précédente ;

le procédé étant essentiellement caractérisé par (1) un taux de conversion élevé d'au moins 60%, en limite du premier tiers du volume réactionnel du réacteur de polymérisation et (2) un écart type de la fonction de distribution de temps de séjour supérieur au temps de séjour moyen divisé par $2\sqrt{3}$.

L'invention a également pour objet une installation destinée à la mise en œuvre de ce procédé et appropriée pour une application à l'échelle industrielle.

Dans la présente description, les expressions « milieu très concentré » et « masse ou semi-masse » sont utilisées indifféremment pour avoir la même signification.
Dans la présente description, les expressions « solvant » et « diluant » sont utilisées indifféremment pour avoir la même signification.
Dans cette description, sauf indication expresse différente, tous les pourcentages (%) indiqués sont des % en masse.
D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le premier objet de l'invention est un procédé de synthèse en continu d'un élastomère diénique comprenant les étapes simultanées suivantes:

a) introduire en continu dans un réacteur de polymérisation doté d'une phase gaz et équipé d'au moins un mobile d'agitation et d'un dispositif de décharge, au moins

i. un ou plusieurs monomère(s) à polymériser dont au moins un monomère diène conjugué, et,
ii. de 0 % à 70% en masse d'un solvant organique, calculé par rapport à la masse totale monomère(s) et de solvant

b) polymériser en continu le ou les monomère(s),
c) agiter le milieu de polymérisation par le mouvement continu d'au moins un mobile d'agitation autour d'un axe rotatif,
d) décharger en continu la pâte d'élastomère issue de la polymérisation,
e) couper en continu la pâte d'élastomère déchargée en particules, et
f) éliminer le solvant des particules de la pâte d'élastomère et
g) récupérer l'élastomère diénique des particules ainsi obtenues à l'étape précédente;

le procédé étant essentiellement caractérisé par

(1) un taux de conversion élevé, d'au moins 60%, en limite du premier tiers du volume réactionnel du réacteur de polymérisation et
(2) un écart type de la fonction de distribution de temps de séjour dans le réacteur de polymérisation supérieur au temps de séjour moyen divisé par $2\sqrt{3}$.

Il convient de noter que cette combinaison des caractéristiques d'écoulement et de la conversion constitue un élément essentiel de l'invention qui permet au procédé de polymérisation en continu de répondre au problème technique posé pour la polymérisation en milieu très concentré, adaptable à une production industrielle économiquement avantageuse avec une productivité satisfaisante.
Dans la mesure où le procédé selon l'invention se déroule en continu, il faut comprendre que ces étapes se déroulent simultanément une fois le réacteur alimenté.
Selon une mise en œuvre particulière du procédé de synthèse de l'invention, la polymérisation s'effectue en continu avec une quantité de solvant ou de diluant n'excédant pas 70% en masse de la masse totale de monomère(s) et de solvant, la quantité de solvant pouvant être par exemple d'au moins 10% en masse, voire d'au moins 30% en masse, et d'au plus 60% en masse, voire d'au plus 55% en masse de la masse totale de monomère(s) et de solvant.
Selon une autre mise en œuvre de l'invention, la polymérisation s'effectue sans adjonction de solvant de polymérisation.
Le choix du réacteur de polymérisation constitue, du fait de ces possibilités de mise en œuvre, un aspect particulièrement important du procédé selon l'invention. En effet, on souhaite polymériser des monomères dans des milieux très concentrés. Selon l'invention, par milieux très concentrés, il faut entendre une concentration en monomère(s) dans le mélange solvant+monomère(s) d'au moins 30% en masse, cette concentration pouvant atteindre 100 % en masse en absence de solvant. En outre, on souhaite polymériser jusqu'à l'obtention de taux de conversion élevés en limite du premier tiers du volume réactionnel du réacteur de polymérisation d'au moins 60% et pouvant atteindre 100%.
La viscosité du milieu de polymérisation constitué pour l'essentiel des monomères, de l'élastomère et le cas échéant du solvant, peut atteindre des valeurs élevées. La viscosité inhérente de l'élastomère diénique dépend de sa nature. Elle a une valeur minimale d'au moins 1,5 dl/g, voire d'au moins 4 dl/g, notamment pour les polyisoprènes obtenus par catalyse de coordination. Toutefois, la viscosité inhérente n'excède pas de préférence 10 dl/g, voire 7 dl/g. La viscosité inhérente est déterminée selon la méthode décrite en annexe 1.
L'agitation au sein du réacteur de polymérisation doit assurer le malaxage de ce milieu très visqueux pour permettre la synthèse d'un polymère de qualité constante et homogène.
Outre la compatibilité avec de hautes viscosités, le réacteur doit convenir à une utilisation pour polymériser le ou les monomère(s) selon un mode continu.
Le réacteur de polymérisation selon l'invention est défini comme étant doté d'une phase gaz et équipé d'au moins un mobile d'agitation et d'un dispositif de décharge, ainsi que d'au moins une entrée et une sortie.
Le mobile d'agitation permet une agitation continue du milieu réactionnel. Il peut être de forme variée et est adapté à la technologie du réacteur. De nombreux types peuvent être trouvés dans le commerce. A titre d'exemple, le mobile d'agitation peut être une pâle de type sigma (ou en "Z") ou un autre type de pâles tel que décrit dans le livre David B. Todd, Mixing of Highly Viscous Fluids, Polymers, and Pastes, in Handbook of Industrial Mixing: Science and Practice, E.L. Paul, V.A. Atiemo-Obeng, and S.M. Kresta, Editors. 2004, John Wiley and Sons. Page 998, Page 1021.
Lorsque le réacteur est équipé d'au moins deux mobiles d'agitation, ceux-ci peuvent être contre-rotatifs ou co-rotatifs. Ils peuvent en outre être de type tangentiel ou imbriqué.
Selon certaines configurations, le réacteur de polymérisation est équipé d'un mobile d'agitation. Ainsi, ce type de réacteur peut être formé d'une cuve, d'un mobile d'agitation et d'un dispositif de décharge. Par exemple, on peut citer le réacteur commercialisé par la société LIST AG sous la dénomination malaxeur-réacteur à un bras ou en anglais « single shaft kneader ».
Selon d'autres configurations, le réacteur de polymérisation est équipé de deux mobiles d'agitation.
Selon les configurations décrites ci-dessus, le réacteur de polymérisation peut être formé d'une cuve, de son système d'agitation et d'un dispositif de décharge.
Selon des configurations préférées, le réacteur de polymérisation est plus particulièrement de technologie malaxeur à bras en Z. Par technologie malaxeur à bras en Z, on entend plus particulièrement un mélangeur ou malaxeur formé d'une cuve équipée de deux bras en Z, mus chacun indépendamment ou non autour d'un axe rotatif, de préférence horizontal. Les deux bras en Z sont alors préférentiellement mus en rotation contre-rotative de manière à gaver le dispositif de vidange en fond de cuve.

A titre d'exemple, ce réacteur conforme à l'invention est commercialisé sous divers dénominations telles que :

- les malaxeurs à pâles sigma - vis de décharge, ou en anglais « sigma blades mixer-discharge screw type », commercialisés par la société Battaggion SPA,
- les malaxeurs-extrudeurs ou en anglais « extrusion-kneader », commercialisés par la société Aachener Misch- und Knetmaschinenfabrik Peter Küpper GmbH & Co. KG,
- les malaxeurs doubles Z avec vis d'extrusion ou en anglais « double-z-kneader with extrusion screw », commercialisés par la société Hermann Linden Maschinenfabrik GmbH & Co. KG.,
- les malaxeurs extrudeurs ou en anglais « mixer extruders », commercialisés par la société Aaron Process Equipment Company.

Le réacteur de polymérisation est doté d'une phase gaz permettant l'évacuation de la chaleur de polymérisation par vaporisation d'une partie du milieu réactionnel. Le rapport volumique de la phase gaz au milieu réactionnel dépend du type de réacteur utilisé et sa détermination est à la portée de l'homme de l'art.
Selon une mise en œuvre de l'invention, la polymérisation s'effectue en masse. Dans ce cas il n'y a pas d'adjonction de solvant de polymérisation.
Selon d'autres mises en œuvre de l'invention, la polymérisation s'effectue en semi-masse. Le milieu comprend alors un solvant de polymérisation hydrocarboné inerte, de préférence aliphatique ou alicyclique de faible masse moléculaire, notamment pour des raisons environnementales. On peut citer à titre d'exemple le n-pentane, l'isopentane, les isoamylènes (2-methyl-2-butène, 2-methyl-1-butène et 3-methyl-1-butène), le 2,2-diméthylbutane, le 2,2 dimethyl-propane (neopentane)le n-heptane, le n-octane, l'iso-octane, le cyclopentane, le cyclohexane, le n-hexane, le méthylcyclopentane et le méthylcyclohexane, ainsi que les mélanges de ces composés, le n-pentane étant particulièrement préféré. On peut également citer à titre de solvant, les hydrocarbures aromatiques comme par exemple le benzène ou le toluène.
Le solvant peut être introduit directement dans le réacteur. Il peut également être mélangé préalablement à au moins un autre des composants introduits dans le réacteur de polymérisation, notamment au(x) monomère(s) à polymériser. Cette dernière option constitue une mise en œuvre préférentielle selon l'invention.
Selon le procédé de l'invention, on polymérise au moins un monomère diène conjugué.

Par monomère diène conjugué, on entend un monomère diène conjugué ayant de 4 à 16 atomes de carbone. A titre de diènes conjugués conviennent notamment le butadiène-1,3, le 2-méthyl-1,3-butadiène, les 2,3-di(alkyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, le myrcène etc...
Selon des mises en œuvre du procédé de l'invention, le monomère diène conjugué peut être copolymérisé avec un ou plusieurs monomères diènes conjugués. Selon d'autres mises en œuvre du procédé de l'invention, lorsque le type de polymérisation le permet, le monomère diène conjugué peut être copolymérisé avec un ou plusieurs composés tels que les vinylaromatiques ayant de 8 à 20 atomes de carbone. Selon d'autres mises en œuvre encore, lorsque le type de polymérisation le permet, le monomère diène conjugué peut être copolymérisé avec un ou plusieurs monomères diènes conjugués et avec un ou plusieurs vinylaromatiques ayant de 8 à 20 atomes de carbone.
A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc...
Selon une mise en œuvre du procédé de l'invention, le monomère diène conjugué peut être introduit sous la forme d'une coupe pétrolière comprenant le ou les monomères à polymériser. Ainsi, par exemple, lorsque l'on souhaite polymériser de l'isoprène, celui-ci peut être introduit dans le réacteur de polymérisation sous la forme d'une coupe C5 pétrolière.
Le choix des monomères est dicté par le type de polymérisation envisagée et le polymère souhaité. Selon des mises en œuvre, le procédé de polymérisation en milieu très concentré de l'invention peut s'appliquer à la polymérisation anionique initiée par exemple au moyen d'un composé organique d'un métal alcalin ou alcalino-terreux. Selon d'autres mises en œuvre du procédé de l'invention, il peut s'appliquer à la polymérisation en chaîne par catalyse (selon le mécanisme de coordination-insertion), au moyen d'un système catalytique à base d'un métal de terre rare, de titane ou d'un autre métal de transition.

Dans le cadre d'une polymérisation anionique, l'initiateur de polymérisation peut être tout initiateur anionique, mono-ou polyfonctionnel connu. Toutefois un initiateur contenant un métal alcalin tel que le lithium ou alcalino-terreux tel que le baryum est utilisé à titre préférentiel. Comme initiateurs organolithiens conviennent notamment ceux comportant une ou plusieurs liaisons carbone-lithium tels que le n-butyllithium (n-BuLi), ou encore les amidures de lithium. Des composés représentatifs contenant du baryum utilisables dans le cadre de la présente invention sont ceux décrits par exemple dans les demandes de brevet FR-A- 2 302 311 et FR-A- 2 273 822 et les certificats d'addition FR-A-2 338 953 et FR-A-2 340 958. De tels initiateurs de polymérisation anionique sont connus de l'homme de l'art Dans le cadre d'une polymérisation en chaîne par catalyse de coordination on utilise un système catalytique à base métal de terre rare ou de de titane.

De tels systèmes catalytiques sont amplement décrits dans la littérature.

A titre d'exemple, un tel système catalytique peut être préparé à base d'au moins :

- un sel organique de terre rare,
- un agent d'alkylation

et, le cas échéant,

- un donneur d'halogène et/ou
- un monomère diène conjugué de préformation.

Par l'expression « à base de » utilisée pour définir les constituants du système catalytique, on entend le produit ou les produits de réaction de ces constituants après prémélangeage de tout ou partie des constituants, ou, le cas échéant, après préformation et/ou vieillissement du système catalytique ou encore le produit ou les produits de la réaction *in situ* de ces constituants.

Le système catalytique peut être préparé en discontinu ou en continu. Selon une mise en œuvre du procédé de l'invention, en amont du réacteur de polymérisation, une installation de synthèse en continu du système catalytique alimente en continu le réacteur de polymérisation. Le système catalytique peut être introduit directement dans le réacteur ou être mélangé préalablement à l'un au moins des autres composants qui alimentent le réacteur de polymérisation.

Selon l'invention, on entend par "terre rare" un métal choisi parmi l'yttrium, le scandium et les lanthanides, métaux ayant un numéro atomique allant de 57 à 71 inclus dans le tableau périodique des éléments de Mendeleïev. De préference le métal de terre rare est choisi parmi les lanthanides, le néodyme étant plus particulièrement préféré.

Par sel organique d'un métal de terre rare on entend par exemple les tris(carboxylates), tris(alcoolates), tris(acétylacétonates) ou tris(organophosphates) de terre rare.

Lorsque le sel organique de terre rare est un tris(carboxylate) de terre rare, le carboxylate peut être choisi parmi les esters d'acides carboxyliques aliphatiques, linéaires ou ramifiés, ayant 6 à 16 atomes de carbone dans la chaîne linéaire, et les esters d'acides carboxyliques aromatiques comportant entre 6 et 12 atomes de carbone, substitués ou non. A titre d'exemple on peut citer le néodécanoate (versatate), l'octoate, l'hexanoate, linéaires ou ramifiés, ou encore le naphthénate, substitué ou non. Parmi ceux-ci, le 2-éthylhexanoate, le naphténate ou le néodécanoate (versatate) de terre rare est particulièrement préféré.

Lorsque le sel organique de terre rare est un tris(alcoolate) de terre rare, l'alcoolate peut être choisi parmi les alcoolates d'un alcool ou d'un polyol dérivé d'un hydrocarbure aliphatique ou cyclique et notamment d'un hydrocarbure aliphatique, linéaire ou ramifié, ayant 1 à 10 atomes de carbone dans la chaîne linéaire, plus particulièrement 4 à 8 atomes de carbone. On peut mentionner par exemple le néo-pentanolate.

Lorsque le sel organique de terre rare est un tris(organophosphate) de terre rare, l'organophosphate peut être choisi les diesters d'acide phosphorique de formule générale (R'O)(R"O)PO(OH), dans laquelle R' et R", identiques ou différents, représentent un radical alkyle, aryle ou alkylaryle. A titre d'exemple on peut citer utiliser le tris [dibutyl phosphate] de néodyme, le tris [dipentyl phosphate] de néodyme, le tris [dioctyl phosphate] de néodyme, le tris [bis (2-éthylhexyl) phosphate] de néodyme, le tris [bis (1-méthylheptyl) phosphate] de néodyme, le tris [bis (p-nonylphenyl) phosphate] de néodyme, le tris [butyl (2-éthylhexyl) phosphate] de néodyme, le tris [(1-méthylheptyl) (2-éthylhexyl) phosphate] de néodyme, le tris [(2-éthylhexyl) (p-nonylphényl) phosphate] de néodyme, le tris [bis (2-éthylhexyl) phosphate] de néodyme, le tris[bis(oléyllyl) phosphate] ou le tris[bis(linéolyl) phosphate].

Parmi les organophosphates de terre rare, le sel est plus préférentiellement encore le bis(2-éthylhexyl)phosphate de terre rare.

Le sel organique de terre rare est préférentiellement choisi parmi le tris[bis(2-éthylhexyl)phosphate] de néodyme et le tris(versatate) de néodyme.

Le sel de terre rare est mis en solution ou en suspension selon les cas de manière classique dans un solvant hydrocarboné inerte choisi par exemple parmi les solvants aliphatiques ou alicycliques de bas poids moléculaire tel que le cyclohexane, le méthylcyclohexane, le n-heptane, ou un mélange de ces solvants.

A titre d'agent d'alkylation utilisable dans le système catalytique selon l'invention, on peut citer des alkylaluminiums choisi parmi des trialkylaluminiums, ou des hydrures de dialkylaluminium, le groupement alkyl comportant de 1 à 10 atomes de carbone. A titre de tri(alkylaluminium), on peut citer le triéthylaluminium, le tri-isopropylaluminium, le triisobutylaluminium, le tributylaluminium ou le trioctylaluminium. Parmi les alkylaluminiums on préfère le triisobutylaluminium ou l'hydrure de diisobutylaluminium. A titre d'agent d'alkylation utilisable dans le système catalytique selon l'invention, on peut également citer les aluminoxanes, composés issus de l'hydrolyse partielle d'un ou de plusieurs trialkylaminium, tels que le méthylaluminoxane, le triisobutylaluminoxane ou encore les méthylaluminoxanes.

Lorsque le système catalytique comprend un donneur d'halogène, on peut utiliser un halogénure d'alkyle, un halogénure d'alkylaluminium ou un sesquihalogénure d'alkylaluminium. On utilise préférentiellement un halogénure d'alkylaluminium, le groupement alkyl comportant de 1 à 8 atomes de carbone. Parmi ceux-ci, on préfère le chlorure de diéthylaluminium.

Selon un mode de réalisation, pour la constitution du système catalytique on utilise en combinaison l'hydrure de diisobutylaluminium et le chlorure de diéthylaluminium à titre d'agent d'alkylation et de donneur d'halogène, respectivement.

Selon une caractéristique particulière du système catalytique, le ou les métaux de terre rare sont présents dans le système catalytique selon une concentration égale ou supérieure à 0,002 mol/l et, de préférence, allant de 0,002 à 0,1 mol/l et plus particulièrement allant de 0,010 mol/l à 0,08 mol/l, voire allant de 0,02 à 0,07 mol/l.

Selon une autre caractéristique particulière du système catalytique, le rapport molaire (agent d'alkylation / sel de terre(s) rare(s)) dans ledit système catalytique présente une valeur d'au moins 1/1 et d'au plus 20/1, et, encore plus avantageusement, d'au plus 5/1.

Selon encore une autre caractéristique particulière du système catalytique, le rapport molaire (donneur d'halogène / sel de terre rare) peut présenter une valeur d'au moins 2/1, de préférence d'au moins 2,6/1, et d'au plus 3,5/1, de préférence d'au plus 3/1.

Lorsque le système catalytique comprend un monomère diène conjugué de préformation utilisé pour « préformer » ledit système catalytique, celui-ci peut être choisi parmi les monomères diènes conjugués cités précédemment. Le 1,3-butadiène ou l'isoprène sont particulièrement préférés.

On notera que le rapport molaire (monomère de préformation / sel de terre(s) rare(s)) peut présenter une valeur allant de 10/1 à 70/1, de préférence 25/1 à 50/1.

A titre de système catalytique préformé ou non, on peut utiliser dans le cadre de la présente invention ceux décrits dans les documents WO-A-02/38636, WO-A-03/097708 et WO-A-2007045417 au nom des Demanderesses.

Selon des variantes d'exécution du procédé de polymérisation catalytique conforme à l'invention, on peut introduire dans le réacteur de polymérisation, par un flux indépendant de l'introduction du système catalytique utilisé pour la réaction de polymérisation, une quantité supplémentaire prédéterminée d'au moins un composé alkylaluminium de formules $AlR_3$ ou $HAlR_2$ ou $R"_nAlR'_{3-n}$, dans lesquelles R et R' représentent un groupe alkyle de 1 à 20 atomes de carbone, saturé ou non, préférentiellement de 1 à 12 atomes de carbone, R" représente un groupe allylique, n un entier inclusivement de 1 à 3. Ce composé alkylaluminium est identique ou non à celui du système catalytique. De telles variantes sont décrites notamment dans les documents WO2006133757, EP 1845118, WO 10/069511, WO10/069805

Selon une mise en œuvre du procédé de polymérisation de l'invention, tous les composants du milieu réactionnel initial, c'est-à-dire les monomères à polymériser, le solvant éventuel, l'initiateur de polymérisation ou le système catalytique et, le cas échéant, l'alkylaluminium supplémentaire, peuvent être introduits individuellement directement dans le réacteur de polymérisation.

Selon d'autres mises en œuvre du procédé de l'invention, au moins deux composants du milieu réactionnel initial ne sont pas introduits individuellement directement dans le réacteur de polymérisation. Le mélange des dits composants peut-être assuré par divers moyens connus de l'homme de l'art avec des mélangeurs statiques, dynamiques ou à ultrasons. Le mélange peut être conditionné en température avant d'entrer dans le réacteur de polymérisation.

Une deuxième étape du procédé selon l'invention concerne la polymérisation des monomères diènes jusqu'à atteindre (1) un taux de conversion élevé d'au moins 60% , en limite du premier tiers du volume réactionnel du réacteur de polymérisation avec (2) un écart type de la fonction de distribution de temps de séjour dans le réacteur de polymérisation supérieur au temps de séjour moyen divisé par $2\sqrt{3}$.

Selon le procédé de l'invention, le taux de conversion des monomères en polymère est d'au moins 60%, en limite du premier tiers du volume réactionnel du réacteur de polymérisation. On entend par volume du réacteur de polymérisation, le volume existant dans le réacteur entre le point d'entrée des réactifs et la sortie du réacteur, hors dispositif de décharge. Ce taux de conversion limite de 60%, associé à la caractéristique spécifique relative à la fonction de distribution de temps de séjour de l'invention, est indispensable pour palier la formation de mousse et écarter le phénomène d'expansion du milieu réactionnel. En effet, en dessous de 60% et sans satisfaire la condition relative à la fonction de distribution de temps de séjour de l'invention, on observe la formation de bulles qui rapidement conduit à une expansion incontrôlable du milieu réactionnel. Pour atteindre ce taux de conversion nécessaire d'au moins 60%, l'homme du métier dispose de nombreux leviers ou moyens techniques qu'il peut faire varier en de multiples combinaisons. Parmi ces différents leviers techniques on peut citer la température de réaction, la concentration en monomère dans le milieu réactionnel, la concentration en catalyseur ou initiateur de polymérisation dans le milieu réactionnel, le temps de séjour moyen.... Les moyens à mettre en œuvre pour atteindre au moins 60% de conversion en limite du premier tiers du volume réactionnel du réacteur de polymérisation sont à la portée de l'homme du métier. La simple consigne d'atteindre une limite minimale de conversion, en l'occurrence au moins 60% en limite du premier tiers du volume réactionnel du réacteur de polymérisation, constitue pour lui une identification des combinaisons de moyens à mettre en œuvre pour exécuter cette consigne. Le taux de conversion peut être déterminé de différentes façons, connues de l'homme de l'art. Par exemple, le taux de conversion peut être déterminé à partir d'une mesure réalisée sur un échantillon prélevé en limite du premier tiers du volume réactionnel du réacteur de polymérisation par exemple par chromatographie en phase gazeuse (CPG). On mesure la concentration de monomère(s) résiduel(s) (non converti(s)) dans l'échantillon). Par différence entre la concentration du ou des monomère(s) introduit(s) dans le réacteur de polymérisation ($C_i$) et la concentration de monomère(s) résiduel(s) mesurée dans l'échantillon prélevé ($C_r$), on détermine le taux de conversion en pourcentage massique comme étant :

$$X\,\%\,\mathrm{mass} = 100 * \left[\frac{(\mathrm{C_i} - C_r)}{C_i}\right]$$

avec :

- *X% mass* : taux de conversion en pourcentage massique ;
- $C_i$ : concentration du ou des monomères introduite dans le réacteur de polymérisation;
- $C_r$ : concentration du ou des monomères résiduels mesurée dans l'échantillon prélevé ;

Préférentiellement ce taux de conversion est d'au moins 80% et plus préférentiellement encore de 85% à 100%, pour une productivité croissante.

Le procédé de l'invention est également caractérisé par les conditions d'écoulement dans le réacteur pendant la réaction de polymérisation. La caractérisation de ces écoulements par une fonction de distribution de temps de séjour est telle que l'écart type de la fonction de distribution de temps de séjour est supérieur au temps de séjour moyen divisé par $2\sqrt{3}$. Plus particulièrement, l'écart type de la fonction de distribution de temps de séjour est supérieur au temps de séjour moyen divisé par 2. La fonction de distribution de temps de séjour dans le réacteur de polymérisation peut être déterminée de manière connue en soi par un homme du métier. Par exemple, elle peut être déterminée par la modélisation des points expérimentaux obtenus en mesurant par Chromatographie Phase Gaz les évolutions de concentration d'un traceur en sortie du réacteur, suite à une injection très rapide, de ce traceur, selon un mode d'introduction par impulsion d'un produit chimiquement inerte selon le principe décrit dans le livre Jacques Villermaux, Génie de la réaction chimique : conception et fonctionnement des réacteurs. Editors. 1993, TEC & DOC - LAVOISIER, Page 170 à 172.

La combinaison de ces deux caractéristiques de taux de conversion et d'écoulement constitue un élément essentiel de l'invention. On dispose ainsi selon l'invention, d'un procédé de synthèse, en milieu très concentré et en continu, de polymères diéniques présentant une productivité accrue, et une flexibilité remarquable.

La thermique de la réaction de polymérisation est principalement régulée par la vaporisation au moins partielle des constituants de la phase non polymérique du milieu réactionnel. La régulation de la thermique de la réaction de polymérisation par la vaporisation d'une partie des constituants de la phase non polymérique du milieu réactionnel implique un espace libre (permanent ou temporaire) au-dessus dudit milieu susceptible d'accueillir la phase gaz comme cela a été défini précédemment. Pour contrôler la température du réacteur et donc maîtriser l'évacuation de la chaleur dégagée par la réaction de polymérisation, plusieurs configurations sont envisageables.

Ainsi selon une variante, un condenseur interne peut être installé dans la phase gaz du réacteur.

Selon une autre variante, une boucle de condensation externe est utilisée. Selon cette variante, une partie de la phase gaz générée par la vaporisation du milieu réactionnel pendant la polymérisation, est entraînée par une sortie du réacteur vers un condenseur. Le condensat peut ensuite avantageusement être réinjecté en tout ou partie dans le réacteur en se substituant pour partie au solvant et/ou aux monomères dans le mélange d'au moins un monomère et de solvant, ou être stocké pour une utilisation ultérieure. Dans ce dernier cas de figure, il convient alors de réajuster les débits entrant ou sortant du réacteur de polymérisation de manière à maintenir constant le volume réactionnel ou le temps de séjour dans le réacteur. Un dispositif peut-être installé pour enlever les incondensables soit du réacteur, soit de la boucle de condensation en fonction des variantes utilisées pour contrôler la thermique de la réaction.

Selon une autre variante encore, la thermique de la réaction de polymérisation peut également être partiellement contrôlée par le refroidissement apporté par les composants initiaux injectés dans le réacteur de polymérisation quand la température des dits composants est à plus basse température que le milieu réactionnel. Les composants initiaux injectés dans le réacteur de polymérisation peuvent ainsi être régulés à la température souhaitée entre -5°C et la température ambiante.

Selon d'autres variantes, la thermique de la réaction de polymérisation peut aussi être partiellement contrôlée par le refroidissement via les double-enveloppes ou les arbres d'agitation des réacteurs.

Ces différentes variantes sont combinables entre elles, tout en sachant que le procédé se déroulant en continu, les variantes combinées se déroulent simultanément. On préfèrera au moins la variante de la boucle de condensation externe car la surface d'échange n'est pas limitée par la place disponible à l'intérieur du réacteur.

La polymérisation est réalisée dans le réacteur dans des conditions d'équilibre thermodynamique entre le milieu de polymérisation et la phase gaz. Ainsi, selon une mise en œuvre particulière du procédé de l'invention, une régulation de la pression de la phase gaz dans le réacteur, plus réactive qu'une régulation de température peut avantageusement être mise en place et permettre de maintenir le milieu réactionnel à une pression et donc, du fait de l'équilibre thermodynamique, à une température choisie.

Selon une mise en œuvre du procédé de l'invention, la réaction de polymérisation peut également être conduite sous vide, auquel cas une connexion à un circuit de vide peut être prévue de préférence sur la boucle de condensation externe.

Les très faibles valeurs de pression absolue permettent une polymérisation à très basse température, conditions opératoires favorables notamment à la synthèse de certains élastomères diéniques.

De manière classique, la polymérisation se déroule à une température comprise dans un domaine allant de -30°C à 100°C. Pendant l'étape de polymérisation du ou des monomères, le milieu réactionnel, qui peut atteindre une viscosité élevée, est maintenu sous agitation par le mouvement autour d'un axe rotatif, de préférence horizontal, du ou des mobiles d'agitation du réacteur de polymérisation.

Une autre étape de l'invention consiste à décharger en continu une partie du milieu réactionnel sous forme d'une pâte d'élastomère comprenant l'élastomère synthétisé. Cette décharge en continu s'effectue par un dispositif de décharge totalement ou partiellement intégré réacteur de polymérisation, tel qu'un dispositif de soutirage à engrenages ou à vis, disposé en fond ou sur le côté du réacteur. Pour maîtriser le débit de sortie du réacteur, les dispositifs complémentaires peuvent-être installés en sortie du réacteur. Ainsi, selon une variante particulière de l'invention, la pâte d'élastomère est déchargée par l'action combinée d'au moins une vis de vidange et d'une pompe à engrenages, qui constituent tous deux le système de décharge, par gavage des engrenages avec la pâte d'élastomère déchargée par le dispositif à vis. On peut ainsi avantageusement maintenir un débit sortant du réacteur équivalent à un débit entrant dans le réacteur afin d'assurer le fonctionnement en continu à temps de séjour constant.

Lorsque le dispositif de décharge comprend une vis, elle peut être simple ou double.

A ce stade et selon une variante de l'invention, le procédé de synthèse d'un élastomère diénique peut être poursuivi de manière connue en soi. Ainsi, selon une mise en œuvre, la polymérisation peut être stoppée, éventuellement après une étape de modification de l'élastomère diénique.

Une autre étape du procédé de l'invention consiste à couper la pâte d'élastomère déchargée. La pâte d'élastomère est acheminée vers un dispositif destiné à la couper. Ce type de dispositif est préférentiellement un granulateur qui permet de transformer la pâte en particules de formes variables et de volumes moyens compris entre 0,07 $cm^3$ et 12 $cm^3$. L'étape de granulation peut être mise en œuvre dans différentes conditions connues de l'homme de l'art et qui conviennent au procédé selon l'invention. Ainsi, par exemple, la granulation peut s'effectuer sous eau permettant d'alimenter une étape d'élimination du solvant des particules de la pâte d'élastomère par stripping à la vapeur d'eau, ou encore dans une phase gazeuse permettant d'alimenter une étape d'élimination du solvant des particules de la pâte d'élastomère par séchage différent du stripping à l'eau. Selon un aspect préférentiel, la granulation s'effectuera sous eau.. A titre d'exemple, ce type de granulateur sous eau est commercialisé sous diverses dénominations telles que le granulateur sous eau, ou en anglais « Underwater Pelletizers », commercialisé par la société Gala Industries, le granulateur sous eau, ou en anglais « Underwater Pelletizing », par la société Kreyenborg Industries.

Le procédé se poursuit ensuite de manière connue en soi par la séparation et récupération de l'élastomère diénique préparé. Les monomères n'ayant pas réagi et/ou le solvant contenu dans la pâte d'élastomère, sous forme de particules, peuvent être éliminés, selon des méthodes connues de l'homme de l'art.

L'élastomère récupéré à l'issue de ces différentes étapes peut ensuite être conditionné de manière connue en soi, sous forme de balles par exemple.

Selon une variante de l'invention, qui constitue une variante particulièrement préférée, avant l'étape de coupe e), la solution d'élastomère déchargée à l'étape d), est transférée en continu (étape $d_1$)) vers un malaxeur disposant d'une phase gaz, d'au moins un mobile d'agitation et d'un dispositif de décharge, pour y subir un traitement complémentaire de nature physique ou chimique (étape $d_2$)).

Ce malaxeur est avantageusement autonettoyant. On entend par "autonettoyant" selon l'invention que son système d'agitation balaie au moins 90% du volume du malaxeur, préférentiellement 95% du volume. Parmi les malaxeurs envisageables, on peut citer les réacteurs de technologie malaxeur continu muni d'un dispositif de décharge à au moins une vis et notamment les malaxeurs continus agités avec bi-vis de décharge. De tels malaxeurs sont commercialisés par exemple par la Société LIST AG sous la dénomination malaxeurs-réacteurs à double bras ou en anglais « Twin Shaft Kneader Reactor » ou encore par la société Buss-SMS-Canzler sous la dénomination de malaxeurs réacteurs à double bras ou en anglais « large volume processors, twin shaft horizontal»
Le malaxeur peut revêtir différents rôles pour mettre en œuvre diverses étapes postérieures à la polymérisation.
Ainsi, selon une première mise en œuvre de cette variante de l'invention, dans le cas où le taux de conversion de 100% n'a pas été atteint dans le réacteur de polymérisation, la polymérisation peut être poursuivie dans ce deuxième réacteur dans des conditions similaires à celles du premier réacteur jusqu'à atteindre un taux de conversion supérieur à celui atteint dans le premier réacteur, de préférence un taux de conversion allant de 96% à 100%. Pour maîtriser la thermique de la fin de réaction de polymérisation, les mêmes variantes que pour le réacteur de polymérisation peuvent être envisagées tout en étant adaptées à la conception technologique du réacteur. Une boucle de condensation peut notamment être utilisée. Lorsqu'une boucle de condensation est utilisée, elle fonctionne de la même manière que celle du réacteur de polymérisation décrite plus haut. Le flux de condensat, en tout ou partie, peut être soit re-injecté dans le malaxeur, soit réintroduit en amont du premier réacteur, en se substituant pour partie au solvant et/ou aux monomères dans le mélange d'au moins un monomère et de solvant, ou encore stocké pour une utilisation ultérieure. Ces différentes options sont combinables entre elles.

Selon une autre mise en œuvre de cette variante de l'invention, le malaxeur peut également être utilisé pour concentrer le milieu réactionnel en retirant le cas échéant une partie du solvant, et/ou des monomères n'ayant pas réagi. Cette étape est dite étape de concentration. Une boucle de condensation est alors utilisée. Cette boucle fonctionne de la même manière que celle du réacteur de polymérisation décrite plus haut. Le flux de condensat n'est alors pas re-injecté dans le malaxeur, mais peut avantageusement être réintroduit en tout ou partie en amont du premier réacteur, en se substituant pour partie au solvant et/ou aux monomères dans le mélange d'au moins un monomère et de solvant ou être stocké pour une utilisation ultérieure.
Selon une autre mise en œuvre de cette variante de l'invention, le malaxeur peut également être utilisé pour dévolatiliser le milieu réactionnel en retirant le cas échéant le solvant, et/ou les monomères n'ayant pas réagi. Une boucle de condensation est alors utilisée. Cette boucle fonctionne de la même manière que celle du réacteur de polymérisation décrite plus haut. Le flux de condensat n'est alors pas re-injecté dans le malaxeur, mais peut avantageusement être réintroduit en tout ou partie en amont du premier réacteur, en se substituant pour partie au solvant et/ou aux monomères dans le mélange d'au moins un monomère et de solvant ou être stocké pour une utilisation ultérieure.
Selon une autre mise en oeuvre de cette variante de l'invention, des réactions postérieures à la polymérisation peuvent être conduites dans ce malaxeur par addition d'agents appropriés. On peut envisager l'adjonction d'agent stoppant la polymérisation, d'additifs anti-oxydants, d'agents modifiant la macrostructure de l'élastomère...Cette autre mise en œuvre peut être combinée aux précédentes.
Ces différentes mises en œuvre sont combinables entre elles. Il est entendu que, dans la mesure où il s'agit d'un procédé en continu, ces différentes étapes, lorsqu'elles sont combinées, sont mises en œuvre simultanément. Par exemple, le malaxeur peut être utilisé pour poursuivre la polymérisation tout en concentrant le milieu réactionnel.
La pâte d'élastomère issue de cette étape de traitement complémentaire est déchargée en continu de ce malaxeur (étape $d_3$)). Cette décharge en continu s'effectue par un dispositif dont est muni le malaxeur. Des dispositifs complémentaires pour le transport des produits peuvent-être installés en sortie du dispositif de décharge du réacteur pour maîtriser le débit de sortie. Ainsi, selon une variante particulière de l'invention, cette dernière est déchargée par l'action combinée d'au moins une vis de vidange et d'une pompe à engrenages qui constituent tous deux le système de décharge, par gavage des engrenages avec la pâte d'élastomère déchargée par le dispositif à vis.
A ce stade, le procédé peut être poursuivi de manière connue en soi. Ainsi, selon le traitement complémentaire subi, la polymérisation peut être stoppée ou des additifs peuvent être ajoutés à la pâte d'élastomère en sortie du malaxeur.
La pâte d'élastomère est ensuite acheminée vers le dispositif de coupe de l'étape e) et le procédé de l'invention est poursuivi.

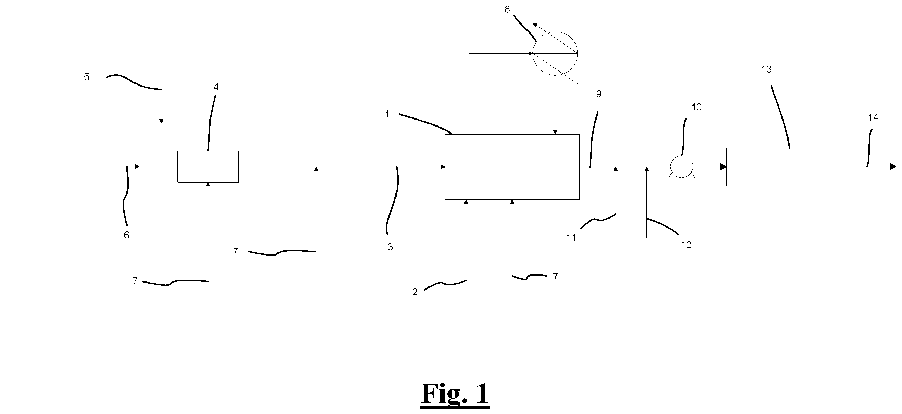

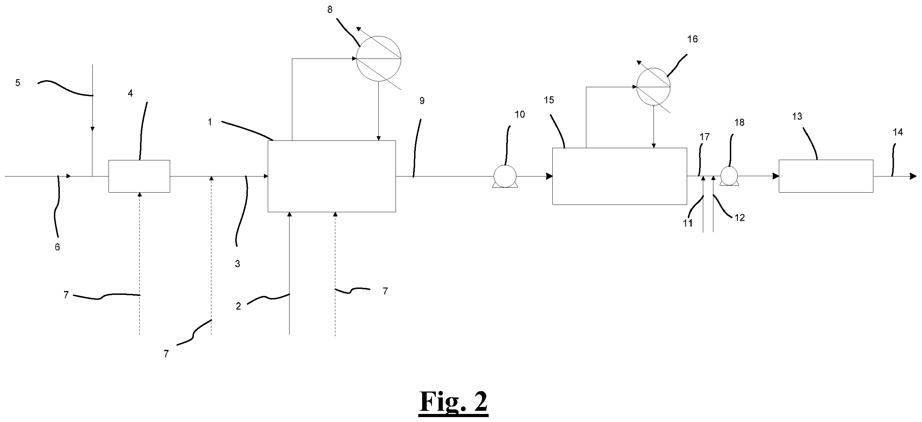

L'invention a également pour objet toute installation destinée à la mise en œuvre du procédé de synthèse en continu d'un élastomère diénique et appropriée pour une application à l'échelle industrielle.
À titre illustratif et non limitatif, deux installations pour la synthèse en continu d'un élastomère diénique conformément à deux modes de réalisation du procédé de synthèse de l'invention sont plus particulièrement décrites par référence aux figures 1 et 2, chacune constituant une représentation schématique d'une installation.

La Figure 1 est un schéma d'une installation selon un mode de réalisation de l'invention pour la synthèse en continu d'un élastomère diénique par catalyse de coordination intégrant un réacteur de polymérisation et un granulateur.
La Figure 2 est un schéma d'une installation selon un mode de réalisation de l'invention pour la synthèse en continu d'un élastomère diénique par catalyse de coordination intégrant, outre un réacteur de polymérisation et un granulateur, un malaxeur auto-nettoyant.

L'installation illustrée à la figure 1 comporte essentiellement un réacteur de polymérisation 1 qui est doté d'une phase gaz et équipé d'au moins un mobile d'agitation et d'un dispositif de décharge à au moins une vis. Le réacteur 1 est équipé de moyens permettant, en milieu concentré, d'atteindre un écoulement spécifique de sorte que la fonction de distribution de temps de séjour est telle que l'écart type de cette fonction est supérieur au temps de séjour moyen divisé par $2\sqrt{3}$, de préférence supérieur au temps de séjour moyen divisé par 2.
Le réacteur 1 est ainsi équipé d'un système d'agitation adapté aux viscosités élevées que peut atteindre le milieu réactionnel. En effet, le procédé de synthèse de l'invention est également adapté à de la polymérisation en masse. Cette variante particulière de l'invention permet à l'homme du métier d'estimer le type d'agitation à prévoir. Des systèmes d'agitation envisageables sont décrits plus haut.
Selon des configurations préférées, le réacteur de polymérisation est plus particulièrement de technologie malaxeur à bras en Z (ou malaxeur sigma). Par technologie malaxeur à bras en Z, on entend plus particulièrement un mélangeur ou malaxeur formé d'une cuve équipée de deux bras en Z, mus chacun autour d'un axe rotatif de préférence horizontal. Chacun des bras est soutenu de part et d'autre des deux côtés opposés de la cuve. Lorsque les bras sont imbriqués, ils sont mus en rotation avec des rapports de vitesse fixe, tels qu'ils ne se heurtent pas. Lorsque les bras sont tangentiels, ils sont mus en rotation indépendamment l'un de l'autre ou non.. Les deux bras en Z sont préférentiellement mus en rotation contre-rotative de manière à gaver le dispositif de vidange en fond de cuve.

Le réacteur de polymérisation 1 est au moins relié

- à plusieurs sources d'alimentation en continu dont au moins une source d'alimentation 2 en système catalytique, une source d'alimentation 3 en au moins un monomère, le cas échéant mélangé au solvant hydrocarboné inerte, et
- à une sortie adaptée pour évacuer dudit réacteur 1, en continu, la pâte d'élastomère en un flux sortant par un dispositif de décharge.

Selon la variante de l'installation illustrée par la figure 1, le réacteur de polymérisation 1 est relié à une source d'alimentation 3 en un mélange d'au moins un monomère et de solvant. Un mélangeur 4, situé en amont du réacteur de polymérisation 1, permet de réaliser ce mélange. Ce mélangeur 4 est alimenté par une source en au moins un monomère 5 et par une source en solvant 6, et est relié au réacteur de polymérisation 1.
Selon des variantes d'exécution du procédé de polymérisation catalytique conforme à l'invention, on peut introduire dans le réacteur de polymérisation, par un flux distinct et indépendant de l'introduction du système catalytique utilisé pour la réaction de polymérisation, une quantité supplémentaire prédéterminée d'au moins un composé alkylaluminium.
Selon une variante d'installation illustrée par des pointillés sur la figure 1, le réacteur de polymérisation 1 est également relié à une source d'alimentation en agent alkylant supplémentaire 7. L'agent alkylant peut, de manière alternative, être ajouté au mélange de monomère et de solvant, avant l'entrée dans le réacteur 1, la source d'alimentation en agent alkylant supplémentaire 7 étant ainsi reliée à la source d'alimentation en monomère et solvant 3, comme cela est indiqué en pointillé sur la figure 1. Ou encore selon une autre alternative également illustrée sur la figure 1 par des pointillés, l'agent alkylant peut être injecté directement dans le mélangeur 4 pour y être mélangé au monomère et au solvant, la source d'alimentation en agent alkylant supplémentaire 7 étant alors reliée au mélangeur 4.
Selon une variante de l'installation illustrée à la figure 1, la source d'alimentation en système catalytique 2 peut être reliée à une installation non-illustrée pour la préparation en continu du système catalytique telle que décrite dans EP 1 968 734 A1
Le réacteur de polymérisation 1 est muni d'un dispositif de décharge à au moins une vis qui permet de décharger en continu la pâte d'élastomère en un flux sortant 9. Ce dispositif de décharge est constitué d'au moins une vis de vidange, intégrée au réacteur 1, et d'une pompe à engrenages 10 en aval du réacteur 1. Le dispositif de décharge est particulièrement adapté pour décharger en continu un produit de viscosité élevée et permet de ce fait de réguler le débit sortant du réacteur 1 afin qu'il soit identique au débit entrant dans ce même réacteur 1. Le dispositif de décharge envisageable est plus amplement décrit plus haut.
La présence d'une phase gaz dans le réacteur 1, le système d'agitation adapté aux viscosités élevées et le dispositif de décharge en continu constituent, avec les différentes alimentations en monomères, solvant et système catalytique, des moyens indispensables pour pouvoir mettre en œuvre le procédé de synthèse en continu d'un élastomère diénique notamment caractérisé par un taux de conversion d'au moins 60%, en limite du premier tiers du volume réactionnel du réacteur de polymérisation en combinaison avec un écoulement spécifique de sorte que l'écart type de la fonction de distribution de temps de séjour dans le réacteur de polymérisation est supérieur au temps de séjour moyen divisé par $2\sqrt{3}$
Selon certaines mises en œuvre du procédé de polymérisation, la thermique de la réaction de polymérisation est régulée par la vaporisation au moins partielle des constituants non polymériques du milieu réactionnel. Sur la figure 1 illustrant une variante de ce procédé, le réacteur de polymérisation 1 est équipé d'une boucle de condensation qui permet

- la condensation des gaz issus du réacteur 1 via un condenseur 8 et
- le retour en tout ou partie du condensat dans le réacteur 1.

Selon un mode de réalisation optionnel non-illustré, la boucle de condensation peut avantageusement être reliée à un dispositif permettant l'élimination des produits incondensables de manière connue en soi.
Selon le mode de réalisation de l'invention illustré sur la figure 1, on injecte ensuite au flux de la pâte élastomère 9 déchargée du réacteur 1, un stoppeur et un antioxydant, par le biais respectivement de sources d'alimentation 11 et 12 en amont de la pompe à engrenage 10 L'installation illustrée à la figure 1 comprend en outre un granulateur 13, de préférence sous eau. Le granulateur 13 est muni d'une entrée relié à la pompe à engrenage 10 par laquelle le dispositif de décharge alimente le granulateur 13 en pâte d'élastomère à couper. Le granulateur 13 est également muni d'une sortie adaptée pour évacuer dudit granulateur 13, en continu, les particules de pâte d'élastomère en un flux 14 vers notamment un dispositif destiné à l'élimination du solvant et du ou des monomères.
L'installation illustrée à la figure 2 comporte les mêmes éléments en amont du réacteur de polymérisation 1 que ceux représentés à la figure 1, jusqu'au réacteur de polymérisation 1. Elle comporte en outre un malaxeur 15 en aval du réacteur de polymérisation 1 et relié à ce dernier via la pompe à engrenages 10. Le malaxeur 15 dispose d'un dispositif d'agitation qui balaye au moins 90% du volume du malaxeur, préférentiellement 95% de son volume, assurant ainsi un auto-nettoyage.
Le malaxeur 15 est au moins muni

- d'une entrée reliée à une source d'alimentation en pâte d'élastomère déchargée du réacteur de polymérisation 1 par la pompe à engrenage 10,
- d'une sortie adaptée pour évacuer dudit malaxeur 15, en continu, la pâte d'élastomère en un flux sortant 17 vers la pompe 18.

Le malaxeur 15 est muni d'un dispositif de décharge à au moins une vis qui permet de décharger en continu la pâte d'élastomère en un flux sortant 17. Ce dispositif de décharge est constitué d'au moins une vis de vidange, intégrée au malaxeur 15 et d'une pompe à engrenages 18 située en aval du réacteur 15.
Le flux sortant de pâte d'élastomère 17 est acheminé vers le granulateur 13, de préférence sous eau, pour y être coupée via la pompe à engrenage 18 qui est reliée au granulateur.
Selon certaines mises en œuvre du procédé de polymérisation, le malaxeur 15 peut revêtir différents rôles pour mettre en œuvre diverses étapes postérieures à la polymérisation. Ainsi, le malaxeur 15 peut être utilisé pour concentrer le milieu réactionnel en retirant le cas échéant une partie du solvant, et/ou des monomères n'ayant pas réagi. Des réactions postérieures à la polymérisation peuvent également être conduites dans ce malaxeur 15. Ces différentes étapes peuvent avoir lieu simultanément au sein du malaxeur 15.
Sur la figure 2 illustrant une variante d'installation pour une de ces mises en œuvre du procédé, le malaxeur 15 est équipé d'une boucle de condensation qui permet:

- la condensation des gaz issus du réacteur 15 via un condenseur 16 et
- le retour en tout ou partie du condensat dans le malaxeur 15.

Cette boucle de condensation assure également un contrôle de la thermique des réactions opérant dans le malaxeur 15 par la vaporisation au moins partielle des constituants non élastomériques du milieu réactionnel.
Selon un mode de réalisation optionnel non-illustré, la boucle de condensation peut avantageusement être reliée à un dispositif permettant l'élimination des produits incondensables de manière connue en soi.
Selon le mode de réalisation de l'invention illustré sur la figure 2, on injecte ensuite au flux de la pâte élastomère 17 déchargée du malaxeur 15, un stoppeur et un antioxydant, par le biais respectivement de sources d'alimentation 11 et 12 en amont de la pompe à engrenage 18.
L'installation illustrée à la figure 2 comprend en outre un granulateur 13, de préférence sous eau. Le granulateur 13 est muni d'une entrée relié à la pompe à engrenage 18 par laquelle le dispositif de décharge alimente le granulateur 13 en pâte d'élastomère à couper. Le granulateur 13 est également muni d'une sortie adaptée pour évacuer dudit granulateur 13, en continu, les particules de pâte d'élastomère en un flux 14, vers notamment un dispositif destiné à l'élimination du solvant et du ou des monomères.
Les figures 1 et 2 sont des schémas de modes de réalisation de l'invention de synthèse en continu d'un élastomère diénique par catalyse de coordination. L'homme du métier comprendra qu'une installation pour la mise en œuvre d'un procédé de synthèse en continu d'un élastomère diénique par polymérisation anionique, qui constitue d'autres modes de réalisation de l'invention, ne comporte pas de source d'alimentation en agent alkylant 7. Selon ce mode, le réacteur de polymérisation est relié respectivement à plusieurs sources d'alimentation dont au moins une source d'alimentation en initiateur de polymérisation qui se substitue alors à la source d'alimentation référencée 2 sur les figures 1 et 2.

*Exemple 1 :*

**Procédé de synthèse d'un polyisoprène par catalyse de coordination en milieu très concentré selon une variante de l'invention**

**Quelques définitions:**

- chlorure de diéthylaluminium = CDEA
- hydrure de diisobutylaluminium = DiBaH

Le procédé de polymérisation a été mis en œuvre sur une ligne en continu selon l'installation représentée à la figure 1 comprenant un réacteur avec phase gaz à double bras en Z de 150 litres total, muni d'un dispositif de décharge avec une vis de vidange et une pompe à engrenage.
De l'isoprène et du pentane sont mélangés dans un mélangeur dynamique 4 prévu à cet effet en amont du réacteur de polymérisation 1. Le mélange obtenu est injecté sous la forme d'un flux entrant 3 directement dans le réacteur 1.
L'isoprène est injecté avec un débit de 7,52 kg/h selon un flux 5 dans le mélangeur 4.
Le pentane est injecté avec un débit de 12,40 kg/h selon un flux 6 dans le mélangeur 4, soit environ 37% massique de monomère dans le milieu réactionnel.
Un système catalytique de coordination est également injecté directement dans le réacteur 1 selon un flux 2. Le système catalytique est à base de tris-[bis-(2-éthylhexyl) phosphate] de néodyme, de butadiène comme monomère de préformation, de DiBaH comme agent alkylant et de CDEA comme donneur d'halogène. Il a été préparé en suivant le mode de préparation décrit au paragraphe I. du document précité WO-A-03/097708 au nom des Demanderesses.
Le système catalytique présente les rapports molaires suivants par rapport au néodyme:

$$\text{Nd/ butadiène/ DiBaH/ CDEA} = 1 / 30 / 1{,}8 / 2{,}6$$

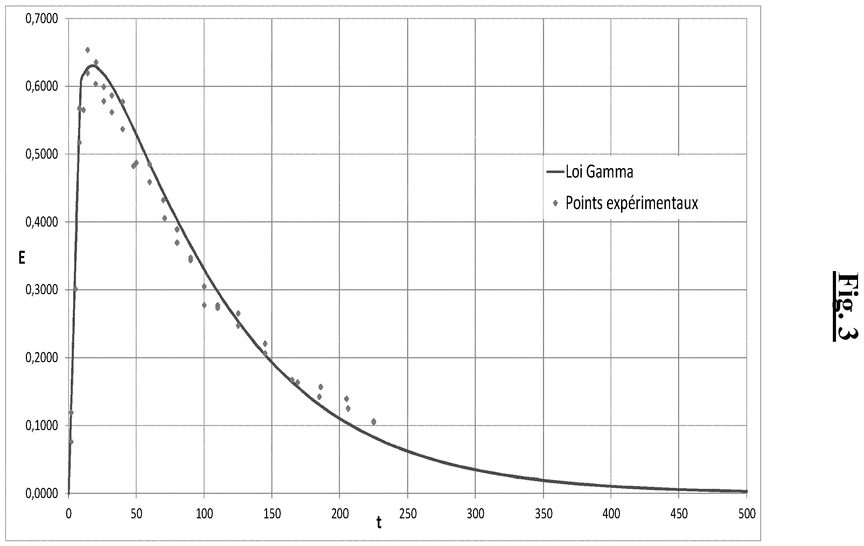

La quantité de néodyme est de 105 µmoles pour 100g d'isoprène. La concentration molaire en néodyme dans le catalyseur est de 0.02 mol/L.
Du DiBaH, est également injecté directement dans le réacteur -1 selon un flux distinct et indépendant 7. La quantité de DiBaH injectée est de 110µmoles/100g d'isoprène. La concentration molaire de la solution de DiBaH est de 0.1 mol/L.
La pression de la phase gaz est régulée à 0.16 barg, les vapeurs sont condensées dans un condenseur externe 8 et renvoyé dans le réacteur de polymérisation 1 à double bras en Z.
La température de la double enveloppe est maintenue à 35°C.
Le temps de séjour moyen $t_0$ de la réaction est de 80 minutes.
La vis de décharge permet de transférer le produit du réacteur 1 à une pompe à engrenage 10.
Le stoppeur et l'antioxydant utilisés sont l'acide oléique, selon 1 pce (pce : parties en masse pour 100 parties en masse d'élastomères), et la N-1,3-diméthylbutyl-N'-phényl-paraphénylènediamine, selon 0,5 pcm (pcm : parties en masse pour 100 parties en masse de monomère isoprène). Ce stoppeur et cet antioxydant sont injectés l'un après l'autre en sortie du réacteur 1, en amont de la pompe à engrenage 10, selon les flux 11 et 12.
La pompe à engrenage 10 transfère la pâte d'élastomères vers le granulateur sous eau 13. Le débit transféré par la pompe à engrenage 10 est égal à la somme des débits injectés dans le réacteur 1 auquel s'ajoute les débits de stoppeur et d'antioxydant.
Aucun phénomène d'expansion n'est observé.
La conversion mesurée sur un échantillon prélevé, en limite du premier tiers du volume du réacteur est de 89%. La mesure de conversion a été établie à partir d'une mesure par CPG de l'isoprène dans l'échantillon prélevé. L'isoprène résiduel, dans l'échantillon prélevé, a été dosé à 4% massique.
Les écoulements sont caractérisés par la distribution de temps de séjour donnée par la figure 3.
Les points expérimentaux permettant d'établir cette distribution de temps de séjour ont été obtenus en mesurant par Chromatographie Phase Gaz les évolutions de concentration d'un traceur suite à une injection très rapide selon un mode d'introduction par impulsion d'un produit chimiquement inerte selon le principe décrit dans le livre Jacques Villermaux, Génie de la réaction chimique : conception et fonctionnement des réacteurs. Editors. 1993, TEC & DOC - LAVOISIER, Page 170 à 172. Les points expérimentaux sont issus de prélèvements effectués dans le flux 9 de la figure 1 en sortie du réacteur 1, à l'extrémité de la vis de décharge.
La modélisation de ces points expérimentaux par une loi gamma a permis de déterminer la variance de la fonction E de distribution de temps de séjour.
La loi gamma pour modéliser la fonction E de distribution de temps de séjour est la suivante :

$$E = \frac{t^{k-1} * e^{\frac{-t}{t_0}}}{\Gamma(k) t_0^k}$$

Avec:

$\Gamma(k)$ : fonction gamma de k ;
$k$ : constante ;
$t_0$ : temps de séjour moyen, soit 80 minutes ;
$t$ : temps de séjour ;

La variance de cette fonction de distribution de temps de séjour est égal à $k * t_0^2$
L'ajustement de la fonction aux points expérimentaux permet de déterminer le paramètre k, qui est égal à 1.22

On en déduit l'écart type de la fonction de distribution de temps de séjour qui est égal à 88,4, ce qui est supérieur au temps de séjour moyen divisé par 2√3, soit $\frac{t_0}{2\sqrt{3}} = \frac{80}{2\sqrt{3}} =$ 23.1.

Ce procédé de synthèse de polyisoprène selon l'invention, en milieu très concentré et en continu, montre que si la combinaison des conditions établies du procédé selon l'invention, à savoir un minimum de conversion de 60% et un écart type de la fonction de distribution de temps de séjour dans le réacteur de polymérisation supérieur au temps de séjour moyen divisé par 2√3, est respectée, on n'observe aucun phénomène d'expansion. Ce procédé conforme à l'invention permet d'apporter une solution au problème technique de fournir un procédé flexible, notamment dans une large gamme de températures, et adaptable à une production industrielle économiquement intéressante du fait de la quantité réduite de solvant utilisé tout en assurant une productivité accrue.

***Exemple 2 :***

**Procédé de synthèse d'un polyisoprène par catalyse de coordination en milieu très concentré selon une autre variante de l'invention**

La polymérisation se déroule de la même manière que l'exemple 1. Les réactifs et les quantités injectés dans le réacteur 1 sont les mêmes. Le stoppeur et l'antioxydant ne sont plus injectés en sortie du réacteur 1.

La pompe à engrenage 10 transfère la pâte d'élastomères vers un malaxeur auto-nettoyant avec phase gaz 15. Le débit transféré par la pompe à engrenage 10 est égal à la somme des débits injectés dans le réacteur 1.
Le malaxeur auto-nettoyant est un malaxeur-réacteur à double bras de volume total 39 litres avec un dispositif de décharge constitué d'une bi-vis de vidange et d'une pompe à engrenage 18. L'écoulement dans ce malaxeur-réacteur à double bras peut s'apparenter à un écoulement piston.
La pression de la phase gaz est régulée à 0.16 barg relatifs, les vapeurs sont condensées dans un condenseur externe 16 et renvoyé dans le malaxeur auto-nettoyant 15.
La température de la double enveloppe est maintenue à 35°C.
Le temps de séjour moyen de la réaction dans le malaxeur auto-nettoyant 15 est de 37 minutes.
Le stoppeur et l'antioxydant utilisés sont l'acide oléique, selon 1 pce (pce : parties en masse pour 100 parties en masse d'élastomères), et la N-1,3-diméthylbutyl-N'-phényl-paraphénylènediamine, selon 0,5 pcm (pcm : parties en masse pour 100 parties en masse de monomère-isoprène). Ce stoppeur et cet antioxydant sont injectés l'un après l'autre en sortie du réacteur 15, en amont de la pompe à engrenage 18, selon les flux 11 et 12.

La pompe à engrenage 18 transfère la pâte d'élastomères vers le granulateur sous eau 13. Le débit transféré par la pompe à engrenage 18 est égal à la somme des débits injectés dans le réacteur 1 auquel s'ajoute les débits des flux de stoppeur 11 et d'antioxydant 12.

Aucun phénomène d'expansion n'est observé.

La conversion mesurée sur un échantillon prélevé dans le flux 17 en amont de la pompe à engrenage 18 est de 99,98%. La mesure de conversion a été établie à partir d'une mesure par CPG de l'isoprène dans l'échantillon prélevé.

L'isoprène résiduel, dans l'échantillon prélevé, a été dosé à 74 ppm.

Ce procédé de synthèse de polyisoprène selon l'invention, en milieu très concentré et en continu, montre que si la combinaison des conditions établies du procédé selon l'invention, à savoir un minimum de conversion de 60% et un écart type de la fonction de distribution de temps de séjour dans le réacteur de polymérisation supérieur au temps de séjour moyen divisé par 2√3, est respectée, on n'observe aucun phénomène d'expansion. Ce procédé conforme à l'invention permet d'apporter une solution au problème technique de fournir un procédé flexible, notamment dans une large gamme de températures, et adaptable à une production industrielle économiquement intéressante du fait de la quantité réduite de solvant utilisé tout en assurant une productivité accrue, sans expansion du milieu réactionnel. Ce procédé permet en outre d'augmenter le taux de conversion jusqu'à atteindre 99,98%.

***Exemple 3 :***

**Procédé de synthèse d'un polyisoprène par catalyse de coordination en milieu très concentré non conforme par rapport à l'invention**

Le procédé de polymérisation a été mis en œuvre sur une ligne en continu selon l'installation comprenant un réacteur de technologie malaxeur continu, agité et autonettoyant, avec phase gaz, à double bras de 29 litres total, muni d'un dispositif de décharge constitué d'une bi-vis et d'une pompe à engrenage. La vitesse des bras est de 20 tr/min.
De l'isoprène et du pentane sont mélangés dans un mélangeur dynamique prévu à cet effet en amont du réacteur de polymérisation. Le mélange obtenu est injecté sous la forme d'un flux entrant directement dans le réacteur de polymérisation.
L'isoprène est injecté avec un débit de 3.63 kg/h dans le mélangeur dynamique.
Le pentane est injecté avec un débit de 4.47 kg/h dans le mélangeur dynamique, soit environ 42% massique de monomère dans le milieu réactionnel.

Un système catalytique de coordination est également injecté directement dans le réacteur de polymérisation. Le système catalytique est à base de tris-[bis-(2-éthylhexyl) phosphate] de néodyme, de butadiène comme monomère de préformation, de DiBaH comme agent alkylant et de CDEA comme donneur d'halogène. Il a été préparé en suivant le mode de préparation décrit au paragraphe I. du document précité WO-A-03/097708 au nom des Demanderesses.
Le système catalytique présente les rapports molaires suivants par rapport au néodyme:

$$\text{Nd/ butadiène/ DiBaH/ CDEA} = 1 / 30 / 1{,}4 / 2{,}6$$

La quantité de néodyme est de 350 μmoles pour 100g d'isoprène. La concentration molaire en néodyme dans le catalyseur est de 0.02 mol/L.

Du DiBaH, est également injecté directement dans le réacteur 1 selon un flux distinct et indépendant 7. La quantité de DiBaH injectée est de 50μmoles/100g d'isoprène. La concentration molaire de la solution de DiBaH est de 0.01 mol/L.

La pression de la phase gaz est régulée à 0.5 barg, les vapeurs sont condensées dans un condenseur externe et renvoyé dans le réacteur de polymérisation.

La température de la double enveloppe est maintenue à 48°C.
Le temps de séjour moyen de la réaction est de 54 minutes.
La bi-vis de décharge permet de transférer le produit du réacteur à une pompe à engrenage.

Le stoppeur et l'antioxydant utilisés sont l'acide oléique, selon 1 pce (pce : parties en masse pour 100 parties en masse d'élastomères), et la N-1,3-diméthylbutyl-N'-phényl-paraphénylènediamine, selon 0,5 pcm (pcm : parties en masse pour 100 parties en masse de monomère isoprène). Ce stoppeur et cet antioxydant sont injectés l'un après l'autre en sortie du réacteur, en amont de la pompe à engrenage.

La pompe à engrenage transfère la pâte d'élastomères vers un granulateur sous eau. Le débit transféré par la pompe à engrenage est égal à la somme des débits injectés dans le réacteur de polymérisation auquel s'ajoute les débits de stoppeur et d'antioxydant.

Lors de cet essai, une expansion du milieu réactionnel a été observée. Cette expansion ne permet pas de contrôler la thermique de la réaction.

La conversion mesurée sur un échantillon prélevé, en limite du premier tiers du volume du réacteur est de 56%, soit inférieure à la limite minimale exigée pour le procédé de l'invention. La mesure de conversion est établie à partir d'une mesure par CPG de l'isoprène dans l'échantillon prélevé. L'isoprène résiduel, dans l'échantillon prélevé, est dosé à 18% massique.

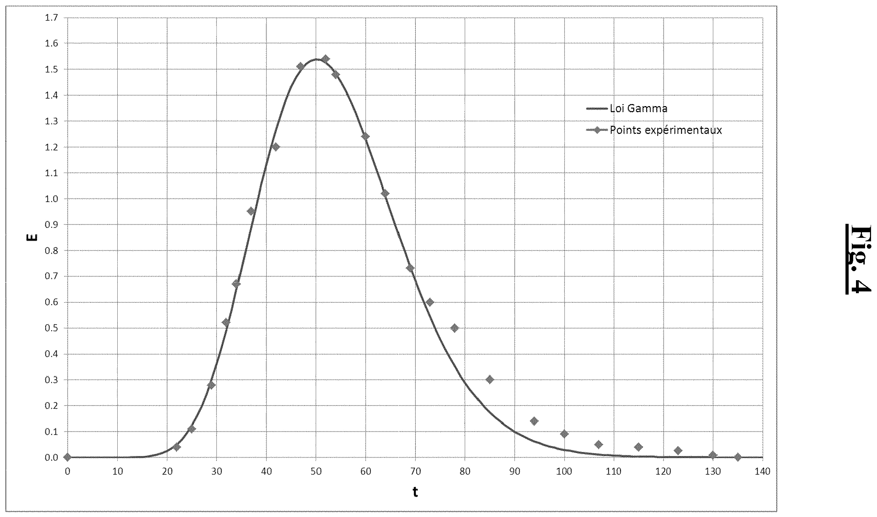

Les écoulements sont caractérisés par la distribution de temps de séjour donnée par la figure 4.

Les points expérimentaux permettant d'établir cette distribution de temps de séjour ont été obtenus en mesurant par Chromatographie Phase Gaz les évolutions de concentration d'un traceur suite à une injection très rapide selon un mode d'introduction par impulsion d'un produit chimiquement inerte selon le principe décrit dans le livre Jacques Villermaux, Génie de la réaction chimique : conception et fonctionnement des réacteurs. Editors. 1993, TEC & DOC - LAVOISIER, Page 170 à 172. Les points expérimentaux sont issus de prélèvements effectués en sortie du réacteur de polymérisation, à l'extrémité de la vis de décharge.

La modélisation de ces points expérimentaux par une loi gamma a permis de déterminer la variance de la fonction E de distribution de temps de séjour.
La loi gamma utilisé pour modéliser la fonction E de distribution de temps de séjour est la suivante :

$$E=\left(\frac{J}{t_0}\right)^J \frac{t^{J-1} * e^{\frac{-Jt}{t_0}}}{(J-1)!}$$

Avec:

- J : nombre de réacteurs en série ;
- $t_0$ : temps de séjour moyen, soit 54 minutes ;
- $t$ : temps de séjour ;

La variance de cette fonction de distribution de temps de séjour est égal à $\frac{t_0^2}{J}$ L'ajustement de la fonction aux points expérimentaux permet de déterminer le paramètre J, qui est égal à 14.

On en déduit l'écart type de la fonction de distribution de temps de séjour qui est égal à 14,43, ce qui est inférieur au temps de séjour moyen divisé par 2√3 soit $\frac{t_0}{2\sqrt{3}}=\frac{54}{2\sqrt{3}}=$ 15,59 qui est la limite minimale exigée pour le procédé de l'invention.

Ce procédé non conforme à l'invention, de synthèse de polyisoprène en milieu très concentré et en continu, montre que si la combinaison des conditions établies du procédé selon l'invention, à savoir un minimum de conversion de 60% et un écart type de la fonction de distribution de temps de séjour dans le réacteur de polymérisation supérieur au temps de séjour moyen divisé par 2√3, n'est pas respectée, on observe un phénomène d'expansion qui ne permet plus de contrôler la thermique de la réaction. Ce procédé non conforme à l'invention ne permet pas d'apporter une solution au problème technique de fournir un procédé flexible, notamment dans une large gamme de températures, et adaptable à une production industrielle économiquement intéressante tout en assurant une productivité accrue.

## ANNEXE 1

La viscosité inhérente est déterminée par la mesure du temps d'écoulement (t) de la solution de polymère et du temps d'écoulement du toluène ($t_0$), dans un tube capillaire. Dans un tube Ubbelhode (diamètre du capillaire 0.46 mm, capacité 18 à 22 ml), placé dans un bain thermostaté à 25 ± 0,1 °C, le temps d'écoulement du toluène et celui de la solution polymère (C) à 0,1 g/dl sont mesurés.
La viscosité inhérente est obtenue par la relation suivante :

$$\eta_{inh}=\frac{1}{C}\ln\left[\frac{(t)}{(t_0)}\right]$$

avec :

- $C$ : concentration de la solution toluénique de polymère en g/dl ;
- $t$ : temps d'écoulement de la solution toluénique de polymère en secondes ;
- $t_0$ : temps d'écoulement du toluène en secondes ;
- $\eta_{inh}$ : viscosité inhérente exprimée en dl/g.

## Revendications

1. Procédé de synthèse en continu d'un élastomère diénique, **caractérisé en ce qu'**il comprend les étapes simultanées suivantes:

   a) introduire en continu dans un réacteur de polymérisation doté d'une phase gaz et équipé d'au moins un mobile d'agitation et d'un dispositif de décharge, au moins

      i. un ou plusieurs monomère(s) à polymériser dont au moins un monomère diène conjugué, et,
      ii. de 0 % à 70% en masse d'un solvant organique, calculé par rapport au masse total monomère(s) + solvant

   b) polymériser en continu le ou les monomère(s),
   c) agiter le milieu de polymérisation par le mouvement continu d'au moins un mobile d'agitation autour d'un axe rotatif,
   d) décharger en continu la pâte d'élastomère issue de la polymérisation,
   e) acheminer en continu la pâte d'élastomère déchargée vers un dispositif de coupe et la couper en particules, et
   f) éliminer le solvant des particules de la pâte d'élastomère et
   g) récupérer l'élastomère diénique des particules obtenues à l'étape précédente.

   **et caractérisé en ce que**

   (1) le taux de conversion est d'au moins 60%, en limite du premier tiers du volume réactionnel du réacteur de polymérisation, et
   (2) l'écart type de la fonction de distribution de temps de séjour dans le réacteur de polymérisation est supérieur au temps de séjour moyen divisé par $2\sqrt{3}$, le temps de séjour étant calculé conformément à la méthode décrite dans la description.

2. Procédé selon la revendication 1, **caractérisé en ce qu'**à l'issue de l'étape d) et préalablement à l'étape e), le procédé comprend les étapes suivantes :

   $d_1$) le transfert en continu de la pâte d'élastomère déchargée du réacteur de polymérisation vers un malaxeur disposant d'une phase gaz, d'un dispositif d'agitation à au moins un mobile d'agitation et d'un dispositif de décharge,
   $d_2$) le traitement complémentaire de nature physique et/ou chimique de ladite pâte d'élastomère effectué dans ledit malaxeur, et
   $d_3$) la décharge en continu de la pâte élastomère issue de l'étape de traitement complémentaire.

3. Procédé selon la revendication 2, **caractérisé en ce que** le dispositif d'agitation du malaxeur balaye au moins 90% du volume du malaxeur, préférentiellement 95% en assurant un auto-nettoyage.

4. Procédé selon l'une quelconque des revendications précédentes, **caractérisée en ce que** la polymérisation a lieu par catalyse de coordination en présence d'un système catalytique à base d'au moins:

   (i) un sel organique de terre rare,
   (ii) un agent alkylant, et, le cas échéant,
   (iii) un donneur d'halogène, et/ou
   (iv) un monomère diène de préformation,

5. Procédé selon la revendication 4, **caractérisé en ce que** lors de l'étape a, on introduit en continu dans le réacteur de polymérisation, par un flux différent de celui du système catalytique, au moins un composé alkylaluminium de formule $AlR_3$ ou $HAlR_2$ dans lesquelles R représente un radical alkyle ayant de 1 à 20 atomes de carbone et H un atome d'hydrogène, qui est identique ou non à celui dudit système catalytique.

6. Procédé selon l'une quelconque des revendications 1 à 3, **caractérisée en ce que** la polymérisation est de type anionique et a lieu en présence d'un initiateur de polymérisation anionique choisi parmi les composés organiques d'un métal alcalin, introduit dans le réacteur de polymérisation en continu lors de l'étape a).

7. Installation pour la mise en œuvre d'un procédé selon une des revendications précédentes, **caractérisée en ce**

**qu'**elle comprend un réacteur de polymérisation à double bras sigma ou en Z (1) doté d'une phase gaz et équipé de deux bras sigma ou en Z et d'un dispositif de décharge, le réacteur (1) étant au moins muni :

- de plusieurs entrées reliées respectivement à plusieurs sources d'alimentation dont au moins une source d'alimentation (2) en système catalytique ou initiateur de polymérisation, une source d'alimentation (5) en au moins un monomère et une source d'alimentation (6) en solvant hydrocarboné inerte, et
- d'une sortie adaptée pour évacuer dudit réacteur (1), en continu, la pâte d'élastomère en un flux sortant reliée par l'intermédiaire du dispositif de décharge à un dispositif (13) destiné à couper la pâte d'élastomère déchargée,
- d'un dispositif de décharge constitué d'au moins une vis de vidange.

**8.** Installation selon la revendication 7, **caractérisée en ce que** le dispositif de décharge est constitué d'au moins une vis de vidange à l'extrémité de laquelle est connectée une pompe à engrenages (10).

**9.** Installation selon l'une quelconque des revendications 7 à 8, **caractérisée en ce que** le dispositif (13) destiné à couper la pâte d'élastomère déchargée du réacteur (1) en particules est un granulateur.

**10.** Installation selon l'une quelconque des revendications 7 à 9, **caractérisée en ce qu'**elle comporte en sortie du réacteur (1) un malaxeur de type autonettoyant (15) balayant au moins 90% du volume du malaxeur, préférentiellement 95% du volume, au moins muni

- d'une entrée reliée à une source d'alimentation en pâte d'élastomère (9) déchargé du réacteur de polymérisation (1),
- d'une sortie adaptée pour évacuer dudit malaxeur (15), en continu, la pâte d'élastomère en un flux sortant (17) vers le granulateur (13).

**11.** Installation selon la revendication 10, **caractérisée en ce que** le dispositif de décharge du malaxeur (15), est constitué d'au moins une vis de vidange à l'extrémité de laquelle est connecté une pompe à engrenages (18).

**12.** Installation selon l'une quelconque des revendications 7 à 11, **caractérisée en ce qu'**au moins l'un du réacteur (1) et, le cas échéant, du malaxeur (15) est pourvu d'une deuxième sortie vers un condenseur, respectivement (8) et (16).

**13.** Installation selon la revendication 12, **caractérisée en ce qu'**au moins l'un des condenseurs (8) et (16) est pourvu d'une sortie pour ramener le condensat vers le réacteur (1), et/ou, le cas échéant, vers le malaxeur (15).

**14.** Utilisation d'une installation selon les revendications 7 à 13 pour la mise en œuvre du procédé selon les revendications 1 à 6.

**15.** Unité de préparation en continu d'un élastomère diénique, **caractérisée en ce qu'**elle intègre l'installation selon l'une quelconque des revendications 7 à 13

## Patentansprüche

**1.** Verfahren zur kontinuierlichen Synthese eines Dienelastomers, **dadurch gekennzeichnet, dass** es die folgenden gleichzeitigen Schritte umfasst:

a) kontinuierliches Eintragen von mindestens

i. einem oder mehreren zu polymerisierenden Monomeren einschließlich mindestens eines konjugierten Dienmonomers und
ii. 0 bis 70 Massen-% eines organischen Lösungsmittels, berechnet bezogen auf die Gesamtmasse von Monomer(en) und Lösungsmittel,
in einen Polymerisationsreaktor, der eine Gasphase enthält und mit mindestens einem Rührrotor und einer Austragsvorrichtung ausgestattet ist,

b) kontinuierliches Polymerisieren des Monomers bzw. der Monomere,
c) Rühren des Polymerisationsmediums durch die kontinuierliche Bewegung mindestens eines Rührrotors um eine Rotationsachse,

d) kontinuierliches Austragen der Elastomerpaste aus der Polymerisation,
e) kontinuierliches Befördern der Elastomerpaste zu einer Schneidevorrichtung und Schneiden der Paste in Teilchen und
f) Entfernen des Lösungsmittels aus den Teilchen der Elastomerpaste und
g) Gewinnen des Dienelastomers der im vorhergehenden Schritt erhaltenen Teilchen;

und **dadurch gekennzeichnet, dass**

(1) der Umsatzgrad an der Grenze des ersten Drittels des Reaktionsvolumens des Polymerisationsreaktors mindestens 60 % beträgt und
(2) die Standardabweichung der Funktion der Verteilung der Verweilzeit in dem Polymerisationsreaktor größer als die mittlere Verweilzeit dividiert durch $2\sqrt{3}$ ist, wobei die Verweilzeit gemäß der in der Beschreibung beschriebenen Methode berechnet wird.

**2.** Verfahren nach Anspruch 1, **dadurch gekennzeichnet, dass** das Verfahren nach Schritt d) und vor Schritt e) die folgenden Schritte umfasst:

$d_1$) kontinuierlicher Transfer der aus dem Polymerisationsreaktor ausgetragenen Elastomerpaste zu einem Mischer mit einer Gasphase, einer Rührvorrichtung mit mindestens einem Rührrotor und einer Austragsvorrichtung,
$d_2$) zusätzliches Behandeln der physikalischen und/oder chemischen Beschaffenheit der Elastomerpaste in den Mischer und
$d_3$) kontinuierliches Austragen der Elastomerpaste aus dem Schritt der zusätzlichen Behandlung.

**3.** Verfahren nach Anspruch 2, **dadurch gekennzeichnet, dass** die Rührvorrichtung des Mischers mindestens 90 % des Volumens des Mischers, vorzugsweise 95 %, unter Gewährleistung von Selbstreinigung überstreicht.

**4.** Verfahren nach einem der vorhergehenden Ansprüche, **dadurch gekennzeichnet, dass** die Polymerisation durch Koordinationskatalyse in Gegenwart eines katalytischen Systems auf Basis von mindestens:

(i) einem organischen Seltenerdmetallsalz,
(ii) einem Alkylierungsmittel und gegebenenfalls
(iii) einem Halogendonor und/oder
(iv) einem Dienmonomer für die Vorbildung stattfindet.

**5.** Verfahren nach Anspruch 4, **dadurch gekennzeichnet, dass** man während Schritt a mindestens eine Alkylaluminiumverbindung der Formel $AlR_3$ oder $HAlR_2$, worin R für einen Alkylrest mit 1 bis 20 Kohlenstoffatomen steht und H für ein Wasserstoffatom steht, die mit derjenigen des katalytischen Systems identisch ist oder nicht, über einen von dem Strom des katalytischen Systems verschiedenen Strom kontinuierlich in den Polymerisationsreaktor einträgt.

**6.** Verfahren nach einem der Ansprüche 1 bis 3, **dadurch gekennzeichnet, dass** die Polymerisation vom anionischen Typ ist und in Gegenwart eines aus organischen Verbindungen eines Alkalimetalls ausgewählten Initiators für die anionische Polymerisation, der während Schritt a) kontinuierlich in den Polymerisationsreaktor eingetragen wird, stattfindet.

**7.** Anlage zur Durchführung eines Verfahrens nach einem der vorhergehenden Ansprüche, **dadurch gekennzeichnet, dass** sie einen Polymerisationsreaktor mit Sigma- oder Z-Doppelarmen (1), der eine Gasphase enthält und mit zwei Sigma- oder Z-Armen und einer Austragsvorrichtung ausgestattet ist,umfasst, wobei der Reaktor (1) mindestens mit:

- mehreren Eingängen, die jeweils mit mehreren Zuführungsquellen einschließlich mindestens einer Quelle (2) zur Zuführung eines katalytischen Systems oder Polymerisationsinitiators, einer Quelle (5) zur Zuführung mindestens eines Monomers und einer Quelle (6) zur Zuführung eines inerten Kohlenwasserstoff-Lösungsmittels verbunden sind, und
- einem Ausgang, der für die kontinuierliche Entfernung der Elastomerpaste als Ausgangsstrom aus dem Reaktor (1) ausgelegt ist und über die Austragsvorrichtung mit einer Vorrichtung (13) zum Schneiden der ausgetragenen Elastomerpaste verbunden ist,
- einer Austragsvorrichtung, die aus mindestens einer Entleerungsschnecke besteht,

ausgerüstet ist.

**8.** Anlage nach Anspruch 7, **dadurch gekennzeichnet, dass** die Austragsvorrichtung aus mindestens einer Entleerungsschnecke, an deren Ende eine Zahnradpumpe (10) angeschlossen ist, besteht.

**9.** Anlage nach einem der Ansprüche 7 bis 8, **dadurch gekennzeichnet, dass** es sich bei der Vorrichtung (13) zum Schneiden der aus dem Reaktor (1) ausgetragenen Elastomerpaste in Teilchen um einen Granulator handelt.

**10.** Anlage nach einem der Ansprüche 7 bis 9, **dadurch gekennzeichnet, dass** sie am Ausgang des Reaktors (1) einen Mischer vom selbstreinigenden Typ (15) umfasst, der mindestens 90 % des Volumens des Mischers, vorzugsweise 95 % des Volumens, überstreicht und mindestens mit

- einem Eingang, der mit einer Quelle zur Zuführung von aus dem Polymerisationsreaktor (1) ausgetragener Elastomerpaste (9) verbunden ist,
- einem Ausgang, der für die kontinuierliche Entfernung der Elastomerpaste als Ausgangsstrom (17) aus dem Mischer (15) zum Granulator (13) ausgelegt ist,

ausgerüstet ist.

**11.** Anlage nach Anspruch 10, **dadurch gekennzeichnet, dass** die Austragsvorrichtung des Mischers (15) aus mindestens einer Entleerungsschnecke, an deren Ende eine Zahnradpumpe (18) angeschlossen ist, besteht.

**12.** Anlage nach einem der Ansprüche 7 bis 11, **dadurch gekennzeichnet, dass** der Reaktor (1) und gegebenenfalls der Mischer (15) mit einem zweiten Ausgang zu einem Kondensator (8) bzw. (16) versehen sind.

**13.** Anlage nach Anspruch 12, **dadurch gekennzeichnet, dass** mindestens einer der Kondensatoren (8) und (16) mit einem Ausgang zum Bringen des Kondensats zum Reaktor (1) und/oder gegebenenfalls zum Mischer (15) versehen ist.

**14.** Verwendung einer Anlage nach einem der Ansprüche 7 bis 13 zur Durchführung des Verfahrens nach den Ansprüchen 1 bis 6.

**15.** Einheit zur kontinuierlichen Herstellung eines Dienelastomers, **dadurch gekennzeichnet, dass** die Anlage nach einem der Ansprüche 7 bis 13 darin integriert ist.

## Claims

**1.** Process for the continuous synthesis of a diene elastomer, **characterized in that** it comprises the following simultaneous steps:

a) introducing continuously into a polymerisation reactor containing a gas phase and equipped with at least one stirring rotor and a discharge device, at least

i. one or more monomer(s) to be polymerised, including at least one conjugated diene monomer, and
ii. from 0% to 70% by mass of an organic solvent, calculated relative to the total mass of monomer(s) and of solvent

b) continuously polymerising the monomer(s),
c) stirring the polymerisation medium via the continuous movement of at least one stirring rotor about a rotary axle,
d) continuously discharging the elastomer paste derived from the polymerisation,
e) continuously conveying the discharged elastomer paste to a chopping device and chopping it into particles, and
f) removing the solvent from the particles of the elastomer paste and
g) recovering the diene elastomer of the particles obtained in the preceding step;

**and characterized in that**

(1) the degree of conversion is at least 60%, at the limit of the first third of the reaction volume of the polymerisation reactor, and
(2) the standard deviation of the residence time distribution function in the polymerisation reactor is greater than the mean residence time divided by $2\sqrt{3}$, the residence time being calculated according to the method described in the specification.

2. Process according to claim 1, **characterized in that**, after step d) and before step e), the process comprises the following steps:

$d_1$) the continuous transfer of the elastomer paste discharged from the polymerisation reactor to a blender containing a gas phase, a stirring device with at least one stirring rotor and a discharge device,
$d_2$) the additional treatment of physical and/or chemical nature of the said elastomer paste performed in the said blender, and
$d_3$) the continuous discharge of the elastomer paste derived from the additional treatment step.

3. Process according to Claim 2, **characterized in that** the stirring device of the blender sweeps at least 90% of the volume of the blender and preferentially 95%, ensuring self-cleaning.

4. Process according to any one of the preceding claims, **characterized in that** the polymerisation takes place by coordination catalysis in the presence of a catalytic system based on at least:

(i) a rare-earth metal organic salt,
(ii) an alkylating agent and, where appropriate,
(iii) a halogen donor, and/or
(iv) a preformation diene monomer.

5. Process according to Claim 4, **characterized in that**, during step a, at least one alkylaluminium compound of formula $AlR_3$ or $HAlR_2$ in which R represents an alkyl radical containing from 1 to 20 carbon atoms and H represents a hydrogen atom, which is identical to or different from that of the catalytic system, is introduced continuously into the polymerisation reactor, via a stream separate from that of the said catalytic system.

6. Process according to any one of Claims 1 to 3, **characterized in that** the polymerisation is of anionic type and takes place in the presence of an anionic polymerisation initiator chosen from organic compounds of an alkali metal, introduced continuously into the polymerisation reactor during step a).

7. Installation for performing a process according to one of the preceding claims, **characterized in that** it comprises a polymerisation reactor with twin sigma or Z-shaped arms (1) containing a gas phase and equipped with two sigma or Z-shaped arms and a discharge device, the reactor (1) being at least equipped with:

- several inlets connected, respectively, to several feed sources including at least one source (2) for feeding with catalytic system or polymerisation initiator, a source (5) for feeding with at least one monomer and a source (6) for feeding with inert hydrocarbon-based solvent, and
- an outlet adapted to remove from the said reactor (1), continuously, the elastomer paste as an exiting stream connected via the discharge device to a device (13) for chopping the discharged elastomer paste,
- a discharge device consisting of at least one emptying screw.

8. Installation according to Claim 7, **characterized in that** the discharge device consists of at least one emptying screw, at the end of which is connected a gear pump (10).

9. Installation according to any one of Claims 7 to 8, **characterized in that** the device (13) for chopping the elastomer paste discharged from the reactor (1) into particles is a granulator.

10. Installation according to any one of Claims 7 to 9, **characterized in that** it comprises, at the outlet of the reactor (1), a blender of self-cleaning type (15) sweeping at least 90% of the volume of the blender, preferentially 95% of the volume, at least equipped with

- an inlet connected to a source for feeding with elastomer paste (9) discharged from the polymerisation reactor (1),
- an outlet adapted for removing from the said blender (15), continuously, the elastomer paste as an exiting stream (17) towards the granulator (13).

**11.** Installation according to Claim 10, **characterized in that** the discharge device of the blender (15) consists of at least one emptying screw, at the end of which is connected a gear pump (18).

**12.** Installation according to any one of Claims 7 to 11, **characterized in that** at least one from among the reactor (1) and, where appropriate, the blender (15) is provided with a second outlet to a condenser, respectively (8) and (16).

**13.** Installation according to Claim 12, **characterized in that** at least one from among the condensers (8) and (16) is provided with an outlet for bringing the condensate to the reactor (1), and/or, where appropriate, to the blender (15).

**14.** Use of an installation according to Claims 7 to 13 for performing the process according to Claims 1 to 6.

**15.** Unit for the continuous preparation of a diene elastomer, **characterized in that** it integrates the installation according to any one of Claims 7 to 13.

1
2
3
4
5
6
7
7
7
8
9
10
11
12
13
14
Fig. 1

14
13
18
12
17
11
16
15
10
9
8
7
2
3
1
4
5
6

Fig. 2

# Fig. 3

Loi Gamma
Points expérimentaux
E
t
0,7000
0,6000
0,5000
0,4000
0,3000
0,2000
0,1000
0,0000
0
50
100
150
200
250
300
350
400
450
500

# Fig. 4

Loi Gamma
Points expérimentaux
E
t
0.0
0.1
0.2
0.3
0.4
0.5
0.6
0.7
0.8
0.9
1.0
1.1
1.2
1.3
1.4
1.5
1.6
1.7
0
10
20
30
40
50
60
70
80
90
100
110
120
130
140

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0127236 B1
- WO 2005087824 A
- US 3770710 A
- FR 2302311 A
- FR 2273822 A
- FR 2338953 A
- FR 2340958 A
- WO 0238636 A
- WO 03097708 A
- WO 2007045417 A
- WO 2006133757 A
- EP 1845118 A
- WO 10069511 A
- WO 10069805 A
- EP 1968734 A1


### Littérature non-brevet citée dans la description


- **DAVID B. TODD.** Mixing of Highly Viscous Fluids, Polymers, and Pastes, in Handbook of Industrial Mixing: Science and Practice. John Wiley and Sons, 2004, 998, , 1021
- Génie de la réaction chimique : conception et fonctionnement des réacteurs. **JACQUES VILLERMAUX.** TEC & DOC - LAVOISIER. 1993, 170-172